# EUROPÄISCHE PATENTSCHRIFT

(11) **EP 2 060 426 B1**
(45) Veröffentlichungstag und Bekanntmachung des Hinweises auf die Patenterteilung: **11.11.2015**
(21) Anmeldenummer: 08019893.0
(22) Anmeldetag: 14.11.2008
(51) Int. Cl.: B60J 7/12

(54) **Verdeck eines Cabriolet-Fahrzeugs**
soft top for a cabriolet vehicle
capote pour vehicule de type cabriolet

(30) Priorität: 17.11.2007 DE 102007054946
(43) Veröffentlichungstag der Anmeldung: 20.05.2009
(73) Patentinhaber: Valmet Automotive Oy, 23500 Uusikaupunki (FI)
(72) Erfinder: Baum, Marian Daniel, 49076 Osnabrück (DE); Selle, Heinrich, 32549 Bad Oeynhausen (DE)
(74) Vertreter: Kronthaler, Schmidt & Coll.

(56) Entgegenhaltungen:
- DE-U1- 20 210 763
- US-A- 5 785 375
- US-A1- 2004 051 343
- US-A1- 2004 104 605
- US-B1- 6 695 385

## Beschreibung

Die Erfindung betrifft ein Verdeck eines Cabriolet-Fahrzeugs, welches zwischen einer einen Fahrgastraum freigebenden Position und einer den Fahrgastraum überspannenden Position verlagerbar ist, nach der im Oberbegriff des Patentanspruches 1 näher definierten Art.

Aus der US 4,695,089 ist es als nächster Stand der Technik bekannt, ein Cabriolet-Fahrzeug mit einem faltbaren Verdeck und einer Anlenkung zum Ausbreiten und Falten des Verdecks bekannt. Auf jeder Seite des Cabriolet-Fahrzeugs ist dabei ein reversibler Motor zur Betätigung der Anlenkung vorgesehen. Um den Einsatz der Motoren auf den betreffenden Seiten zu synchronisieren, ist eine Verbindungsstange oder eine flexible Welle vorgesehen, welche die Ausgangswellen der Motoren verbindet.

Nachteilhafterweise schränkt die Anordnung und der große Bauraumbedarf der Verbindungsstange in der genannten Offenbarung die konstruktive Freiheit bei der Gestaltung des Cabriolet-Fahrzeugs und insbesondere der angrenzenden Bauelemente stark ein.

Weiterhin ist in der US 2,770,489 eine flexible Welle zur Verbindung zweier das Verdeck betätigender Motoren beschrieben.

Es ist Aufgabe der vorliegenden Erfindung, ein Verdeck eines Cabriolet-Fahrzeugs, welches zwischen einer einen Fahrgastraum freigebenden Position und einer den Fahrgastraum überspannenden Position verlagerbar ist, zu schaffen, welches auf einfache und sichere Weise eine auf beiden Fahrzeugseiten synchrone, harmonische und verschleißarme Verdeckbewegung ermöglicht und gleichzeitig eine große konstruktive Freiheit bei der Gestaltung des Verdecks und angrenzender Bereiche des Fahrzeugs erlaubt.

Diese Aufgabe wird bei einem Verdeck eines Cabriolet-Fahrzeugs der eingangs genannten Art gemäß den Merkmalen des kennzeichnenden Teils des Patentanspruches 1 gelöst.

Es ist somit ein Verdeck eines Cabriolet-Fahrzeugs vorgesehen, welches zwischen einer einen Fahrgastraum freigebenden Position und einer den Fahrgastraum überspannenden Position verlagerbar ist, wobei zur Verdeckbewegung jeder Fahrzeugseite wenigstens eine Antriebseinrichtung zugeordnet ist, und wobei eine Verdeckbewegung mittels wenigstens einer mit den Antriebseinrichtungen zusammenwirkenden mechanischen Verbindungseinrichtung synchronisiert ist. Dabei wird erfindungsgemäß vorgeschlagen, dass die Verbindungseinrichtung in oder an einem die Fahrzeugbreite überspannenden Element des Verdecks angeordnet ist.

Ein erfindungsgemäßes Verdeck eines Cabriolet-Fahrzeugs hat den Vorteil, dass die synchronisierende Verbindungseinrichtung, welche in vielfältiger Weise in oder an Querspriegeln oder sonstigen die Fahrzeugbreite überspannenden Verdeckelementen einschließlich Schlaufen eines Verdeckbezuges angeordnet werden kann, mit dieser Anordnung Platz sparend und von außen unsichtbar verstaut werden kann.

Die synchronisierende Verbindungseinrichtung kann dabei z. B. durch eine Integration von Führungen und Kanälen in Profile und Gusskörper von Querspriegeln oder vergleichbaren Verdeckelementen unauffällig an die lokalen räumlichen Bedingungen angepasst sein und als flexible Welle genau der Kontur des angrenzenden Verdeckelements folgen.

Ein mit einer solchen synchronisierende Verbindungseinrichtung ausgebildeter Antrieb ist zudem besonders vorteilhaft bei einem als Modul vormontierbarem Verdecksystem. Wenn die Synchronisation vollständig in das Verdecksystem verlegt ist, kann eine vollständige Funktionsabprüfung auf Verdeckebene gegebenenfalls außerhalb des Fahrzeugs vor der Verdeckmontage durchgeführt werden.

Des Weiteren können vorteilhafterweise aufwendige Leitungsverlegungen durch das Cabriolet-Fahrzeug und eine externe Antriebspositionierung eingespart werden. Auch kann das Risiko von Fehlmontagen und von Beschädigungen durch eine Reduzierung der Anzahl von Prozessschritten bei der Fertigung des Verdecks verringert werden.

Mit der erfindungsgemäßen Synchronisation der Antriebseinrichtungen des Verdecks kann ein eventuell vorliegender Ungleichlauf der beiden Antriebseinrichtungen zueinander ausgeglichen werden, wobei die langsamere Antriebseinrichtung von der schnelleren Antriebseinrichtung unterstützt bzw. die schnellere Antriebseinrichtung von der langsameren Antriebseinrichtung verzögert wird.

Bei einem vorgeschlagenen Verdeck können zudem durch die synchronisierende Verbindungseinrichtung große Toleranzen der einzelnen Antriebe in Bezug auf eine Drehzahl und ein Drehmoment leicht ausgeglichen werden und auch bei sehr nachgiebigen Systemen, wie z. B. bei Antrieben für einen Verdeckstoffhaltebügel, bei labilen Verdecken von Cabriolet-Fahrzeugen, oder bei Verdeckkastendeckel- bzw. Heckdeckelantrieben ein harmonischer Gesamtverdeckablauf sichergestellt werden. Gegenüber elektronisch synchronisierten Antrieben hat eine erfindungsgemäße Synchronisation den Vorteil, dass keine elektromagnetischen Störungen auftreten können.

Weiterhin ermöglicht eine erfindungsgemäße Lösung eine sehr einfache und schnelle Umstellung auf einen unsynchronisierten Betrieb, falls dies erwünscht ist.

Je nach Ausgestaltung eines erfindungsgemäßen Verdecks eines Cabriolet-Fahrzeugs kann es vorgesehen sein, dass die synchronisierende Verbindungseinrichtung in oder an einem die Fahrzeugbreite überspannenden Stoffhaltebügel oder einem die Fahrzeugbreite überspannenden Querelement, z. B. einem Spriegel oder einer sonstigen während einer Verdeckbewegung bewegten Komponenten angeordnet ist. Die Wahl der Anordnung der Verbindungseinrichtung kann der Fachmann je nach Art des Cabriolet-Fahrzeugs und nach Art des jeweiligen Verdecks flexibel wählen.

Ein Zusammenwirken der synchronisierenden Verbindungseinrichtung mit den Antriebseinrichtungen kann auf sehr einfache Weise dadurch realisiert werden, dass die verbindungseinrichtung mechanisch mit den insbesondere als Elektromotoren ausgebildeten Antriebseinrichtungen zusammenwirkt und somit direkt mit den Antriebseinrichtungen gekoppelt ist.

Neben der Anbindung der Verbindungseinrichtung direkt an die Antriebseinrichtungen kann es in einer vorteilhaften Ausbildung der Erfindung auch vorgesehen sein, dass die synchronisierende Verbindungseinrichtung über wenigstens eine beispielsweise an die entsprechende Antriebseinrichtung angeflanschte Getriebeeinrichtung mit den Antriebseinrichtungen verbunden ist. Je nach Wahl der Getriebestufe, an der die Verbindungseinrichtung angeordnet ist, unterscheidet sich die dabei auf die verbindungseinrichtung wirkende Drehzahl und das auf die Verbindungseinrichtung wirkende Drehmoment.

Bei einer antriebsnahen Synchronisation liegt eine große Drehzahl an der Verbindungseinrichtung an, wobei ein Teil des Drehmoments durch eine hierbei vorliegende große Reibkraft verloren gehen kann. Allerdings kann hierdurch eine hohe Synchronisationsgenauigkeit erzielt werden, da sehr große Drehwinkel der Verbindungseinrichtung vorliegen.

Bei einer antriebsfernen Synchronisation sind die zu synchronisierenden Drehmomente bzw. Drehkräfte dagegen groß, so dass die Synchronisationsverbindung massiv ausgelegt werden muss. Durch die geringen Drehzahlen kann hierbei aber die Entstehung von Geräuschen durch die Verbindungseinrichtung vorteilhafterweise stark reduziert werden.

In einer vorteilhaften Ausbildung der Erfindung ist es vorgesehen, dass die Antriebseinrichtungen in unterschiedlicher Drehrichtung arbeiten, wobei die synchronisierende verbindungseinrichtung ausschließlich zur Synchronisation der Antriebseinrichtung eingesetzt und einstückig zwischen den Antriebseinrichtungen angeordnet sein kann.

Wenn die Verbindungseinrichtung in einer hierzu alternativen Ausbildung jeweils ein mit einer Antriebseinrichtung zusammenwirkendes Verbindungselement aufweist, wobei die zueinander weisenden Enden der verbindungselemente derart ausgebildet sind, dass die Verbindungselemente in unterschiedlicher Drehrichtung zueinander drehbar sind, können vorteilhafterweise baugleiche Antriebseinrichtungen mit einer identischen Antriebsrichtung eingesetzt werden.

Eine sehr einfache Drehrichtungsumkehr durch die Verbindungseinrichtung kann dabei dadurch realisiert werden, dass die Verbindungseinrichtung jeweils ein mit einer Antriebseinrichtung zusammenwirkendes Verbindungselement aufweist, wobei wenigstens die zueinander weisenden Enden der Verbindungselemente derart ausgebildet sind, dass über ein zwischen den zueinander weisenden Enden der verbindungselemente angeordnetes Zahnradelement eine Drehrichtungsumkehr der beiden Verbindungselemente umgesetzt wird.

Zur Zusammenwirkung mit dem Zahnradelement weisen die Verbindungselemente der Verbindungseinrichtung in einer einfachen Ausbildung der Erfindung an den zueinander weisenden Enden der Verbindungselemente ein zahnstangenelement auf.

Insbesondere wenn die Verbindungselemente in einer vorteilhaften Ausbildung der Erfindung als Steigungskabel ausgebildet sind, kann das Zahnradelement direkt mit den Verbindungselementen zusammenwirken.

In einer einfachen Ausbildung der Erfindung kann die Verbindungseinrichtung als flexible Rotationseinrichtung ausgebildet sein, wobei sie in einer hierzu alternativen Ausbildung der Erfindung auch mit einer oder mehreren starren Wellen ausgebildet sein kann.

Ein erfindungsgemäßes Verdeck ist in einer vorteilhaften Ausbildung der Erfindung mittels einer Notbetätigungseinrichtung insbesondere bei einem Ausfall von wenigstens einer Antriebseinrichtung betätigbar. Durch den synchronen Antrieb des Verdecks auch während der Notbetätigungsbewegung sind die auf die gleichmäßig bewegten kinematischen Baugruppen wirkenden Betätigungskräfte vorteilhafterweise gering, so dass eine derartige Notbetätigung sicher in Bezug auf die Belastung und Haltbarkeit der beteiligten Bauelemente durchgeführt werden kann.

In einer vorteilhaften Ausbildung der Erfindung ist wenigstens eine Antriebseinrichtungen als Elektromotor ausgebildet, wobei der Elektromotor ein Antriebsmoment direkt in wenigstens ein Drehgelenk des Verdecks einleitet. Somit können mit einer Verbindungseinrichtung Drehgelenke des Verdecks separat von einem Elektromotor angesteuert werden - wodurch eine große Freiheit in der Durchführung eines Verdeckablaufs zur Verfügung gestellt wird - und gleichzeitig die korrespondierenden Drehgelenke der jeweiligen Fahrzeugseite mit einer Verbindungseinrichtung synchronisiert werden.

Ein erfindungsgemäßes Verdeck eines Cabriolet-Fahrzeugs kann vorteilhafterweise sowohl als Soft-Top-Verdeck als auch als Hard-Top-Verdeck ausgebildet sein und ist somit vielfältig einsetzbar.

Weitere Vorteile und vorteilhafte Ausführungen eines Verdecks eines Cabriolet-Fahrzeugs nach der Erfindung ergeben sich aus den Patentansprüchen, der Zeichnung und der Beschreibung.

Nachfolgend sind vorteilhafte Ausführungsbeispiele eines verdecks eines Cabriolet-Fahrzeugs anhand der Zeichnung prinzipmäßig beschrieben.

Es zeigt:
- Fig. 1: eine dreidimensionale Ansicht eines Cabriolet-Fahrzeugs mit einem einen Fahrgastraum überspannenden verdeck;
- Fig. 2: eine vereinfachte perspektivische Darstellung des Verdecks der Fig. 1 in Alleinstellung, wobei von dem Verdeck nur die in Fahrtrichtung linke Hälfte ohne einen Verdeckbezug dargestellt ist, und wobei eine das Verdeck bewegende, mit einer auf der anderen Fahrzeugseite über eine synchronisierende Verbindungseinrichtung verbundene Antriebseinrichtung ersichtlich ist;
- Fig. 3: eine vereinfachte schematische Darstellung von der in der Fig. 2 dargestellten, einer linken Fahrzeugseite zugeordneten Antriebseinrichtung und einer einer rechten Fahrzeugseite zugeordneten Antriebseinrichtung, wobei die Antriebseinrichtungen mit der Verbindungseinrichtung zusammenwirken;
- Fig. 4: eine stark vereinfachte perspektivische Darstellung von zwei Antriebseinrichtungen mit einer alternativen Verbindungseinrichtung;
- Fig. 5: eine vereinfachte ausschnittsweise Prinzipskizze der Verbindungseinrichtung der Fig. 4; und
- Fig. 6: eine stark vereinfachte ausschnittsweise Darstellung einer alternativ zu der in der Fig. 4 ausgebildeten Verbindungseinrichtung.

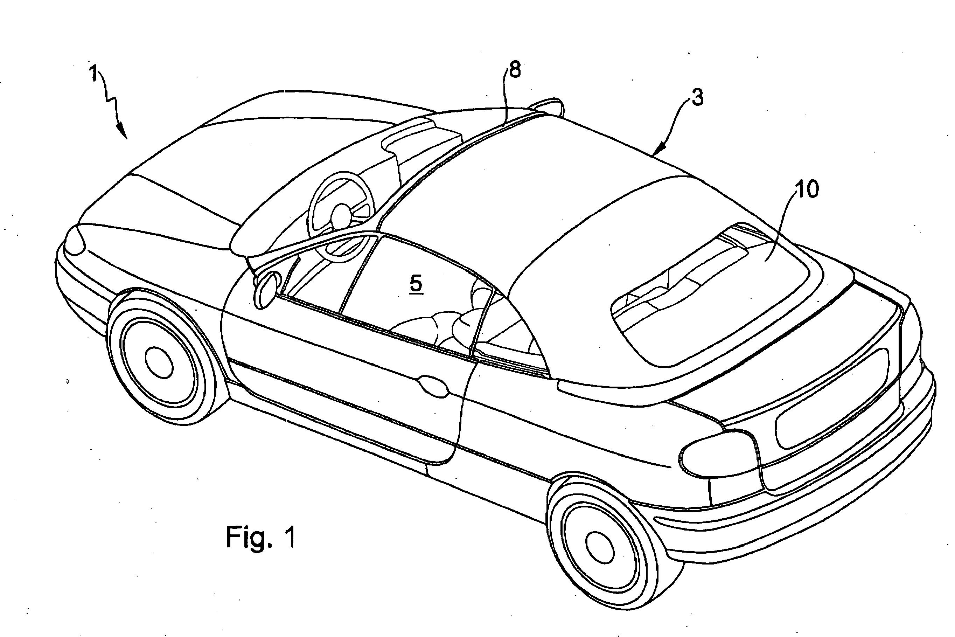

In Fig. 1 ist ein Cabriolet-Fahrzeug 1 mit einem vorliegend als Soft-Top-Verdeck ausgebildeten Verdeck 3 gezeigt, wobei das Verdeck 3 in einer einen Fahrgastraum 5 überspannenden geschlossenen Position dargestellt ist.

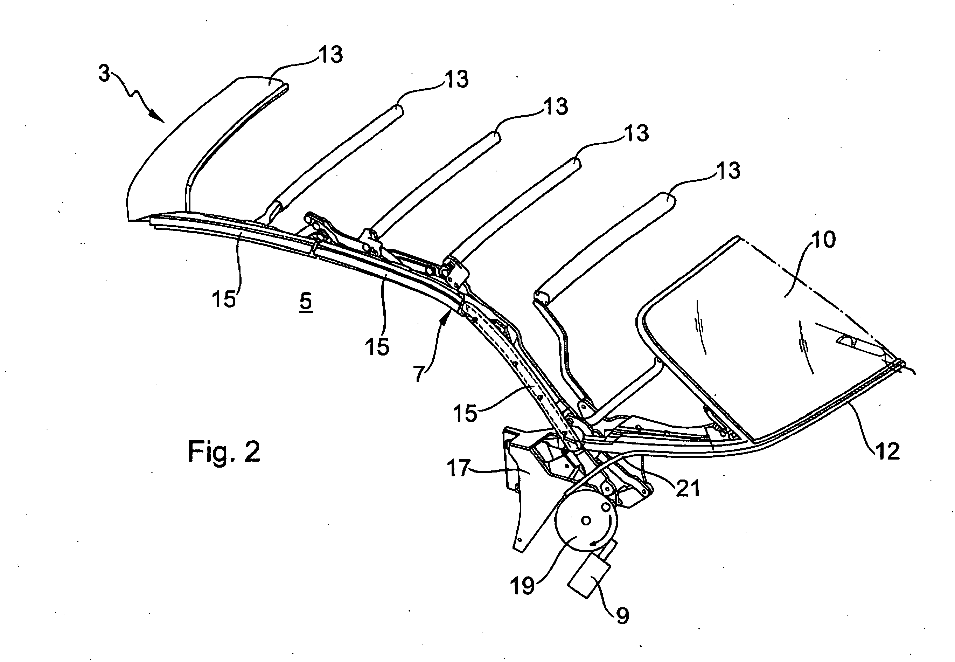

Die Fig. 2 zeigt eine linke Hälfte eines Verdeckgestänges 7 des Verdecks 3 ebenfalls in einer geschlossenen Position, welche im Wesentlichen spiegelbildlich zu einer rechten Hälfte des Verdeckgestänges 7 ausgebildet ist. Das Verdeckgestänge 7 ist in einem vorderen Bereich an einem windschutzscheibenrahmen 8 des Cabriolet-Fahrzeugs 1 anordenbar und weist mehrere eine Fahrzeugbreite überspannende als Spriegel 13 ausgebildete Querelemente auf, welche insbesondere an Seitenholmen 15 des Verdeckgestänges 7 angeordnet sind. Eine Heckscheibe 10 ist vorliegend in einem unteren Bereich an einem Stoffhaltebügel 12 des Verdeckgestänges 7 angeordnet, welcher ebenfalls die gesamte Fahrzeugbreite überspannt.

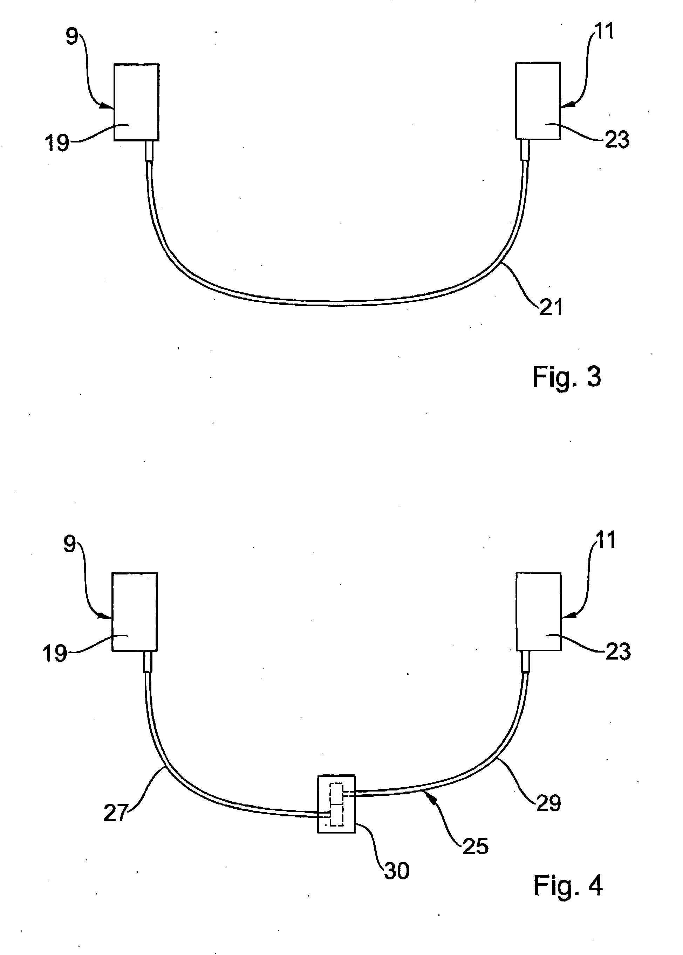

Das Verdeckgestänge 7 ist in einem heckwärtigen Bereich des Verdecks 3 an einem Hauptlager 17 schwenkbar angeordnet und kann mittels zwei in den Fig. 3 und Fig. 4 ersichtlichen, als Elektromotoren 9, 11 ausgebildeten Antriebseinrichtungen von der dargestellten geschlossenen Position in eine den Fahrgastraum 5 freigebende offene Position und umgekehrt überführt werden.

Der in der Fig. 2 ersichtliche Elektromotor 9 wirkt hierzu mit einer als Getriebestufe 19 ausgebildeten Getriebeeinrichtung zusammen, mittels welcher ein Antriebsmoment des Elektromotors 9 auf das verdeckgestänge 7 übertragen werden kann.

Um einen gleichmäßigen verschleißfreien Verdeckablauf gewährleisten zu können, müssen die Elektromotoren 9 und 11 synchron arbeiten, wobei hierzu vorliegend eine als flexible Rotationswelle 21 ausgebildete mechanische Verbindungseinrichtung vorgesehen ist, welche mit der Getriebestufe 19 der linken Fahrzeugseite und einer als Getriebestufe 23 ausgebildeten Getriebeeinrichtung des rechten Elektromotors 11 gekoppelt ist.

Die Getriebestufen 19 und 23 weisen dabei jeweils einen Anschluss zur Aufnahme der flexiblen Rotationswelle 21 auf, so dass die flexible Rotationswelle 21 mechanisch und formschlüssig mit der jeweiligen Getriebestufe 19 bzw. 23 gekoppelt werden kann. Ist die flexible Rotationswelle 21 an beide Getriebestufen 19 und 23 angeschlossen, so sind auch die Elektromotoren 9 und 11 über die flexible Rotationswelle 21 formschlüssig gekoppelt. Ein langsamer als der andere Elektromotor 9 bzw. 11 arbeitender Elektromotor 11 bzw. 9' wird hierdurch von dem schnelleren Elektromotor 9 bzw. 11 unterstützt bzw. wird der schnellere Elektromotor 9 bzw. 11 von dem langsameren Elektromotor 11 bzw. 9 verzögert.

Bei einer Getriebestufe, welche mehrere Übersetzungsstufen aufweist, können verschiedene Anschlüsse in den einzelnen Übersetzungsstufen vorgesehen sein. Je nachdem wie die Übersetzungsstufe zu dem Elektromotor angeordnet ist, ergeben sich verschiedene Auswirkungen der Kopplung über die Verbindungseinrichtung.

Bei einer motornahen Kopplung werden von der Verbindungseinrichtung hohe Drehzahlen übertragen, wobei durch die dabei vorliegende relativ große Reibung bei der Synchronisation Kraft bzw. Drehmoment verloren geht. Allerdings ist dabei eine hohe Synchronisationsgenauigkeit erzielbar.

Eine motorferne bzw. in Richtung des Abtriebs verlegte Kopplung hat dagegen den Vorteil, dass durch die hierbei geringen vorliegenden Drehzahlen die von der Verbindungseinrichtung erzeugten Geräusche sehr gering ausfallen. Allerdings bedingen die dabei vorliegenden großen Kräfte und Drehmomente eine relativ massive Auslegung der Verbindungseinrichtung.

In Fig. 2 ist ersichtlich, dass die flexible Rotationswelle 21 von seiner Kopplung mit der Getriebestufe 19 des linken Elektromotors 9 in Richtung des Stoffhaltebügels 12 des Verdeckgestänges 7 verläuft. Die flexible Rotationswelle 21 wird dann innerhalb eines Hohlprofils des Stoffhaltebügels 12 auf die andere Fahrzeugseite zu ihrer Anordnung an der Getriebestufe 23 des rechten Elektromotors 11 geführt, wodurch die flexible Rotationswelle 21 auf sehr einfache, geschützte und Platz sparende Weise zwischen den Getriebestufen 19, 23 der Elektromotoren 9, 11 verläuft.

In einer alternativen Ausbildung der Erfindung kann es auch vorgesehen sein, dass die flexible Rotationswelle an dem Stoffhaltebügel angeordnet ist oder an oder in einem Spriegel des Verdecks eine Verbindung zwischen jeweils einer Fahrzeugseite zugeordneten Elektromotoren herstellt. Selbstverständlich kann es auch vorgesehen sein, die Verbindungseinrichtung an oder in weiteren die Fahrzeugbreite überspannenden Elementen des Cabriolet-Fahrzeugs anzuordnen.

Verbindungseinrichtungen können auch bei Verdecken eingesetzt werden, welche mehrere Elektromotoren auf jeder Fahrzeugseite aufweisen. Hierbei kommen insbesondere Verdecke in Frage, bei welchen jedem Drehgelenk beispielsweise aus Kraft- und/oder Bauraumgründen eine eigene Antriebseinrichtung eventuell mit einer oder mehrere Getriebestufen zugewiesen sind. Hierbei können vorzugsweise die an entsprechenden Stellen auf entgegengesetzen Fahrzeugseiten angeordneten Antriebseinrichtungen mit einer Verbindungseinrichtung verbunden werden. Die Verbindungseinrichtungen können beispielsweise an oder in Querelementen des Verdecks, wie beispielsweise Querholmen oder Spriegeln, angeordnet werden und die Antriebseinrichtungen entweder direkt oder über Gelenkstufen verbinden.

In Fig. 3 sind die Getriebestufen 19 und 23 der Elektromotoren 9 und 11 stark vereinfacht dargestellt. Die Elektromotoren 9 und 11 sind bei dieser Ausführungsvariante derart ausgebildet, dass sie eine entgegengesetzte Drehrichtung aufweisen. Die flexible Rotationswelle 21 kann somit, wie in der Fig. 3 dargestellt, vorteilhafterweise einfach mit der einstückig ausgebildeten flexiblen Rotationswelle 21 ausgebildet werden.

In Fig. 4 ist im Wesentlichen die in der Fig. 3 dargestellte Anordnung der Elektromotoren 9 und 11 dargestellt, allerdings sind diese hierbei derart ausgebildet, dass sie die gleiche Drehrichtung aufweisen. Eine die Getriebestufen 19 und 23 koppelnde flexible Rotationswelle 25 muss in diesem Fall eine Drehrichtungsumkehr bewerkstelligen. Hierzu weist die flexible Rotationswelle 25 ein an der linken Getriebestufe 19 angeordnetes, als erste flexible Teilwelle 27 ausgebildetes Verbindungselement und ein an der rechten Getriebestufe 23 angeordnetes, als zweite flexible Teilwelle 29 ausgebildetes Verbindungselement auf. An den zueinander weisenden Enden der flexiblen Teilwellen 27 und 29 weist die flexible Rotationswelle 25 eine Drehsinnwandlungseinrichtung 30 auf, so dass die Drehsinnwandlung zwischen den Elektromotoren 9 und 11 von der flexiblen Rotationswelle 25 umgesetzt wird.

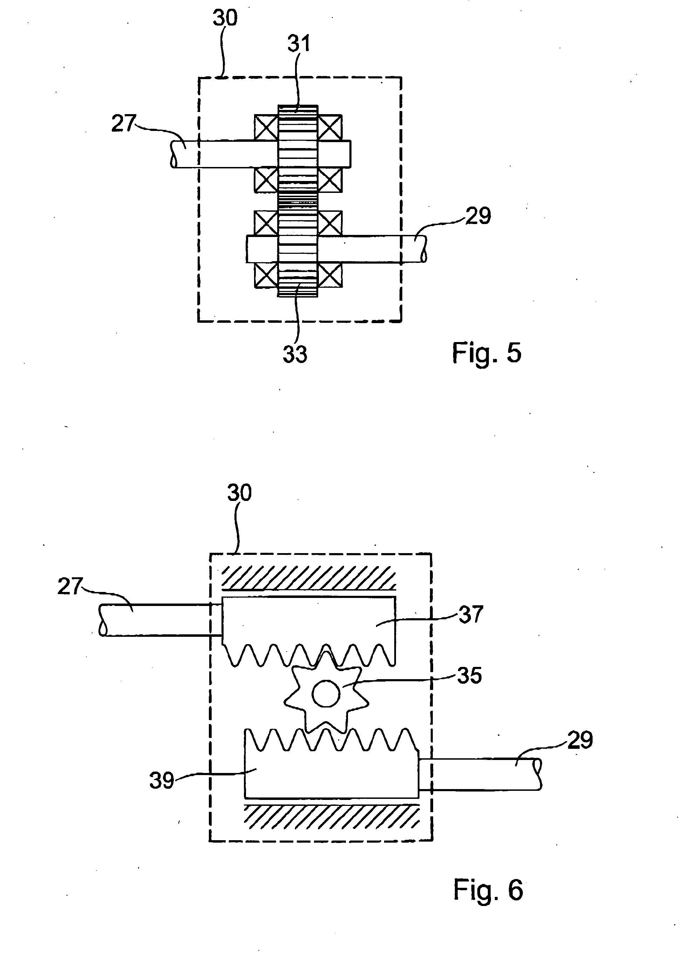

In dem in der Fig. 5 gezeigten Ausführungsbeispiel weisen die flexiblen Teilwellen 27 und 29 an ihren zueinander zeigenden Enden zur Drehsinnwandlung jeweils ein Zahnrad 31 bzw. 33 auf, wobei die Zahnräder 31 und 33 derart gelagert sind, dass sie miteinander in Eingriff stehen. Die flexiblen Teilwellen 27 und 29 drehen sich somit in entgegengesetzter Drehrichtung und sorgen für die Drehsinnwandlung.

Bei dem in der Fig. 6 gezeigten Ausführungsbeispiel weist die Drehsinnwandlungseinrichtung 30 ein als Zahnrad 35 ausgebildetes Zahnradelement auf, welches in Eingriff mit den zueinander weisenden Enden der flexiblen Teilwellen 27 und 29 steht. Die Enden der flexiblen Teilwellen 27 und 29 sind dabei jeweils mit einem Zahnstangenelement 37 bzw. 39 ausgebildet, wobei die Zahnstangenelemente 37 und 39 sowie das Zahnrad 35 derart in der Drehsinnwandlungseinrichtung 30 gelagert sind, dass die Zahnstangenelemente 37 und 39 der flexiblen Teilwellen 27 und 29 mit dem Zahnrad 35 derart in Eingriff stehen, dass eine Bewegung der einen Teilwelle 27 bzw. 29 in einer Bewegung der anderen Teilwelle 29 bzw. 27 resultiert.

In einer vorteilhaften Ausbildung der Erfindung sind die Teilwellen als Steigungskabel ausgebildet, so dass die zueinander weisenden Enden der Steigungskabel direkt mit dem Zahnrad der Drehsinnwandlungseinrichtung in Eingriff stehen.

Es ist weiterhin eine nicht näher dargestellte Notbetätigungseinrichtung vorgesehen, mittels welcher das Verdeck 3 bei einem Ausfall von mindestens einer Antriebseinrichtung 9 bzw. 11 bewegt werden kann. Die Notbetätigungseinrichtung kann dabei gemäß der in der US 4,695,089 Al offenbarten Notbetätigung ausgebildet sein.

## Patentansprüche

1. Verdeck für ein Cabriolet -Fahrzeug (1), wobei das Verdeck zwischen einer einen Fahrgastraum (5) freigebenden Position und einer den Fahrgastraum (5) überspannenden Position verlagerbar ist, umfassend zur Verdeckbewegung auf jeder Fahrzeugseite jeweils eine Antriebseinrichtung (9, 11), und eine Verbindungseinrichtung (21,25), wobei die Verdeckbewegung mittels der mit den Antriebseinrichtungen (9, 11) zusammenwirkenden mechanischen Verbindungseinrichtung (21, 25) synchronisiert ist,
**dadurch gekennzeichnet,**
**dass** die Verbindungseinrichtung (21, 25) in oder an einem die Fahrzeugbreite überspannenden Element (12, 13) des Verdecks (3) angeordnet ist.

2. Verdeck nach Anspruch 1,
**dadurch gekennzeichnet,**
**dass** die Verbindungseinrichtung (21, 25) in oder an einem die Fahrzeugbreite überspannenden Stoffhaltebügel (12) angeordnet ist.

3. Verdeck nach Anspruch 1,
**dadurch gekennzeichnet,**
**dass** die verbindungseinrichtung (21, 25) in oder an einem die Fahrzeugbreite überspannenden Querelement (13) angeordnet ist.

4. Verdeck nach einem der Ansprüche 1 bis 3,
**dadurch gekennzeichnet,**
**dass** die Verbindungseinrichtung (21, 25) mechanisch mit den insbesondere als Elektromotoren (9, 11) ausgebildeten Antriebseinrichtungen zusammenwirkt.

5. Verdeck nach einem der Ansprüche 1 bis 3,
**dadurch gekennzeichnet,**
**dass** die Verbindungseinrichtung (21, 25) über wenigstens eine Getriebeeinrichtung (19, 23) mit den Antriebseinrichtungen (9, 11) verbunden ist.

6. Verdeck nach einem der Ansprüche 1 bis 5,
**dadurch gekennzeichnet,**
**dass** die Antriebseinrichtungen (9, 11) in unterschiedlicher Drehrichtung arbeiten.

7. Verdeck nach einem der Ansprüche 1 bis 5,
**dadurch gekennzeichnet,**
**dass** die Verbindungseinrichtung (25) jeweils ein mit einer Antriebseinrichtung (9, 11) zusammenwirkendes Verbindungselement (27, 29) aufweist, wobei die zueinander weisenden Enden der Verbindungselemente (27, 29) derart ausgebildet sind, dass die Verbindungselemente (27, 29) in unterschiedlicher Drehrichtung zueinander drehbar sind.

8. Verdeck nach einem der Ansprüche 1 bis 5,
**dadurch gekennzeichnet,**
**dass** die verbindungseinrichtung (25) jeweils ein mit einer Antriebseinrichtung (9, 11) zusammenwirkendes Verbindungselement (27, 29) aufweist, wobei wenigstens die zueinander weisenden Enden der Verbindungselemente (27, 29) derart ausgebildet sind, dass über ein zwischen den zueinander weisenden Enden der Verbindungselemente (27, 29) angeordnetes Zahnradelement (35) eine Drehrichtungsumkehr der beiden Verbindungselemente (27, 29) umgesetzt ist.

9. Verdeck nach Anspruch 8,
**dadurch gekennzeichnet,**
**dass** das Zahnradelement (35) mit jeweils einem an den Verbindungselementen (27, 29) angeordneten Zahnstangenelement (37, 39) zusammenwirkt.

10. Verdeck nach Anspruch 8,
**dadurch gekennzeichnet,**
**dass** das zahnradelement direkt mit den insbesondere als Steigungskabeln ausgebildeten verbindungselementen zusammenwirkt .

11. Verdeck nach einem der Ansprüche 1 bis 10,
**dadurch gekennzeichnet,**
**dass** die Verbindungseinrichtung als flexible Rotationseinrichtung (21, 25) ausgebildet ist.

12. Verdeck nach einem der Ansprüche 1 bis 11,
**dadurch gekennzeichnet,**
**dass** das Verdeck (3) mittels einer Notbetätigungseinrichtung insbesondere bei einem Ausfall von wenigstens einer Antriebseinrichtung (9, 11) betätigbar ist.

13. Verdeck nach einem der Ansprüche 1 bis 12,
**dadurch gekennzeichnet,**
**dass** wenigstens eine der Antriebseinrichtungen als Elektromotor ausgebildet ist, welcher ein Antriebsmoment direkt in wenigstens ein Drehgelenk des Verdecks einleitet.

## Claims

1. A hood for a convertible vehicle (1), said hood being displaceable between a position uncovering a passenger compartment (5) and a position covering said passenger compartment (5), said hood comprising a respective drive means (9, 11) and a respective connecting means (21, 25) on either vehicle side to move said hood, the hood movement being synchronised by means of the mechanical connecting means (21, 25) cooperating with the drive means (9, 11), **characterised in that** the connecting means (21, 25) is arranged in or at an element (12, 13) of the hood (3) spanning the vehicle width.

2. The hood according to claim 1, **characterised in that** the connecting means (21, 25) is arranged in or at a fabric retaining bow (12) spanning the vehicle width.

3. The hood according to claim 1, **characterised in that** the connecting means (21, 25) is arranged in or at a transverse element (13) spanning the vehicle width.

4. The hood according to any one of claims 1 to 3, **characterised in that** the connecting means (21, 25) cooperates mechanically with the drive means provided, in particular, as electric motors (9, 11).

5. The hood according to any one of claims 1 to 3, **characterised in that** the connecting means (21, 25) is connected to the drive means (9, 11) via at least one transmission means (19, 23).

6. The hood according to any one of claims 1 to 5, **characterised in that** the drive means (9, 11) work in different directions of rotation.

7. The hood according to any one of claims 1 to 5, **characterised in that** the connecting means (25) comprises a respective connecting element (27, 29) cooperating with a drive means (9, 11), the ends of the connecting elements (27, 29) facing each other being provided such that the connecting elements (27, 29) can be rotated in different directions of rotation with respect to each other.

8. The hood according to any one of claims 1 to 5, **characterised in that** the connecting means (25) comprises a respective connecting element (27, 29) cooperating with a drive means (9, 11), wherein at least the ends of the connecting elements (27, 29) facing each other are provided such that the direction of rotation of the two connecting elements (27, 29) is reversed by a gear element (35) arranged between the ends of the connecting elements (27, 29) facing each other.

9. The hood according to claim 8, **characterised in that** the gear element (35) cooperates with a respective rack element (37, 39) arranged at the respective connecting elements (27, 29).

10. The hood according to claim 8, **characterised in that** the gear element cooperates directly with the connecting elements which are provided, in particular, as pitch cables.

11. The hood according to any one of claims 1 to 10, **characterised in that** the connecting means (21, 25) is provided as a flexible rotation means (21, 25).

12. The hood according to any one of claims 1 to 11, **characterised in that** the hood (3) can be actuated by an emergency actuation means, in particular upon failure of at least one drive means (9, 11).

13. The hood according to any one of claims 1 to 12, **characterised in that** at least one of the drive means is provided as an electric motor, which introduces a drive torque directly into a rotary joint of the hood.

## Revendications

1. Capote pour un véhicule cabriolet (1), ladite capote étant déplaçable entre une position libérant un habitacle (5) et une position couvrant ledit habitacle (5), ladite capote comportant de chaque côté du véhicule un moyen d'entraînement (9, 11) respectif et un moyen de liaison (21, 25) respectif pour déplacer ladite capote, le déplacement de la capote étant synchronisé par le moyen de liaison mécanique (21, 25) coopérant avec le moyen d'entraînement (9, 11), **caractérisé en ce que** le moyen de liaison (21, 25) est disposé dans ou sur un élément (12, 13) de la capote (3) qui s'étend sur toute la largeur du véhicule.

2. Capote selon la revendication 1, **caractérisé en ce que** le moyen de liaison (21, 25) est disposé dans ou sur un étrier de retenue de toile (12) qui s'étend sur toute la largeur du véhicule.

3. Capote selon la revendication 1, **caractérisé en ce que** le moyen de liaison (21,, 25) est disposé dans ou sur un élément transversal (13) qui s'étend sur toute la largeur du véhicule.

4. Capote selon l'une quelconque des revendications 1 à 3, **caractérisé en ce que** le moyen de liaison (21, 25) coopère mécaniquement avec les moyens d'entraînement, ces derniers étant réalisés notamment sous forme de moteurs électriques (9, 11).

5. Capote selon l'une quelconque des revendications 1 à 3, **caractérisé en ce que** le moyen de liaison (21, 25) est relié avec les moyens d'entraînement (9, 11) par au moins un moyen de transmission (19, 23).

6. Capote selon l'une quelconque des revendications 1 à 5, **caractérisé en ce que** les moyens d'entraînement (9, 11) travaillent en directions différentes.

7. Capote selon l'une quelconque des revendications 1 à 5, **caractérisé en ce que** le moyen de liaison (25) comporte un élément de liaison (27, 29) respectif coopérant avec un moyen d'entraînement (9, 11), les extrémités des éléments de liaison (27, 29) tournées les unes vers les autres étant réalisées de manière à permettre la rotation des éléments de liaison (27, 29) dans des sens de rotation différents l'un par rapport à l'autre.

8. Capote selon l'une quelconque des revendications 1 à 5, **caractérisé en ce que** le moyen de liaison (25) comporte un élément de liaison (27, 29) respectif coopérant avec un moyen d'entraînement (9, 11), au moins les extrémités des éléments de liaison (27, 29) tournées les unes vers les autres étant disposées de manière à mettre en oeuvre une inversion du sens de rotation des deux éléments de liaison (27, 29) par un élément d'engrenage (35) disposé entre les extrémités des éléments de liaison (27, 29) tournées les unes vers les autres.

9. Capote selon la revendication 8, **caractérisé en ce que** l'élément d'engrenage (35) coopère avec un élément à crémaillière (37, 39) disposé sur les éléments de liaison (27, 29) respectifs.

10. Capote selon la revendication 8, **caractérisé en ce que** l'élément d'engrenage (35) coopère directement avec les éléments de liaison qui sont réalisés notamment sous forme de filets hélicoïdaux.

11. Capote selon l'une quelconque des revendications 1 à 10, **caractérisé en ce que** le moyen de liaison (21, 25) est realisé sous forme d'un moyen de rotation flexible (21, 25).

12. Capote selon l'une quelconque des revendications 1 à 11, **caractérisé en ce que** la capote (3) peut être actionnée par un moyen d'actionnement de secours, notamment en cas de défaillance d'au moins un moyen d'entraînement (9, 11).

13. Capote selon l'une quelconque des revendications 1 à 12, **caractérisé en ce que** l'on réalise au moins l'un des moyens d'entraînement sous forme d'un moteur électrique introduissant un couple d'entraînement directement dans un pivot de ladite capote.
